# FASCICULE DE BREVET EUROPEEN

(11) **EP 3 912 909 B1**
(45) Date de publication et mention de la délivrance du brevet: **16.11.2022**
(21) Numéro de dépôt: 21184983.1
(22) Date de dépôt: 28.01.2020
(51) Int. Cl.: B64C 27/12, B64D 31/02, B64D 35/02, B64D 27/02

(54) **PROCÉDÉ D'OPTIMISATION DU BRUIT GÉNÉRÉ AU SOL PAR UN GIRAVION**
VERFAHREN ZUR OPTIMIERUNG DES VON EINEM DREHFLÜGELFLUGZEUG AM BODEN ERZEUGTEN LÄRMS
METHOD FOR OPTIMISING THE GROUND NOISE GENERATED BY A ROTORCRAFT

(30) Priorité: 12.02.2019 FR 1901399
(43) Date de publication de la demande: 24.11.2021
(62) Demande divisionnaire de: 20154011.9
(73) Titulaire: Airbus Helicopters, 13725 Marignane Cedex (FR)
(72) Inventeur: GOMEZ, Nayibe, 13090 AIX EN PROVENCE (FR)
(74) Mandataire: GPI Brevets

(56) Documents cités:
- FR-A1- 3 003 514
- US-A1- 2011 024 555
- US-A1- 2012 043 413
- US-A1- 2018 009 542

## Description

La présente invention est du domaine des installations motrices des giravions et en particulier du domaine restreint des installations motrices hybrides.

La présente invention concerne un procédé d'optimisation du bruit généré au sol par un giravion.

Un giravion, désigné également « aéronef à voilure tournante », comporte traditionnellement un fuselage et au moins un rotor principal entraîné en rotation par une installation motrice et assurant au moins partiellement la sustentation et/ou la propulsion du giravion. Le giravion peut aussi comporter un dispositif anticouple. Un dispositif anticouple est parfois constitué par un rotor auxiliaire situé généralement à l'arrière du giravion, à l'extrémité d'une poutre de queue du giravion et entraîné en rotation par son installation motrice.

Un giravion, peut aussi comporter plusieurs rotors principaux assurant simultanément et au moins partiellement la sustentation et/ou la propulsion du giravion.

Un giravion peut également comporter une ou plusieurs hélices d'avancement, placées par exemple de part et d'autre du fuselage, et éventuellement sur une aile du giravion. Les hélices sont généralement entraînées en rotation par l'installation motrice du giravion.

L'installation motrice du giravion peut comporter un ou plusieurs moteurs thermiques, par exemple des turbines à gaz ou bien des moteurs à pistons, ainsi qu'une ou plusieurs boîtes de transmission mécanique de puissance.

Lors de son fonctionnement, un giravion comporte ainsi plusieurs sources potentiellement bruyantes, à savoir chaque moteur thermique, chaque boîte de transmission mécanique de puissance, chaque rotor principal et, le cas échéant, chaque rotor auxiliaire et chaque hélice.

Les bruits générés par un moteur thermique ont pour origine, d'une part, les explosions successives du carburant et, d'autre part, les éléments mécaniques du moteur thermique, tels que notamment les aubes tournantes dans le cas d'une turbine à gaz. Ces bruits générés par un moteur thermique sont variables notamment en fonction des paramètres de fonctionnement du moteur thermique, tels que sa vitesse de rotation, sa température ou encore le couple qu'il fournit par exemple. Eventuellement, ces bruits peuvent aussi varier en fonction des conditions d'utilisation du moteur thermique, en particulier la température et la pression atmosphérique extérieures au moteur thermique.

Les bruits générés par une boîte de transmission mécanique de puissance ont pour origine principale des éléments tournants, tels que des arbres et des roulements de la boîte de transmission mécanique de puissance, ainsi que des éléments de réduction ou d'augmentation de vitesses de rotation, tels que des pignons et/ou des engrenages de cette boîte de transmission mécanique de puissance. Ces bruits générés par une boîte de transmission mécanique de puissance sont variables principalement en fonction des vitesses de rotation de ses éléments tournants et de ses éléments de réduction ou d'augmentation de vitesses de rotation.

Les bruits générés par chaque rotor principal, par chaque rotor auxiliaire et/ou par chaque hélice ont pour origine les comportements aérodynamiques de leurs pales. Ces bruits générés par chaque rotor et/ou par chaque hélice sont variables en fonction de leurs conditions d'utilisation et donc de la phase de vol du giravion.

Les bruits générés par un giravion peuvent poser des problèmes d'acceptation du giravion, notamment vis-à-vis du voisinage des zones d'atterrissage, telles que les aérodromes ou aéroports, ainsi que dans les milieux urbain ou périurbain dans lesquels le giravion peut évoluer à basses altitudes. Les passagers du giravion ainsi que le personnel opérant au sol sur le giravion et autour du giravion subissent également ces nuisances sonores et exigent également de plus en plus de diminuer le bruit auquel ils sont soumis dans l'environnement du giravion.

En outre, bien que posé au sol, un giravion peut être amené à faire tourner son rotor principal, ainsi que son rotor arrière anticouple ou bien ses hélices le cas échéant, pour diverses raisons opérationnelles, de maintenance ou encore de sécurité.

Par exemple, lorsque le giravion est soumis à un vent important, il peut être nécessaire de faire tourner le rotor principal afin que ses pales ne touchent pas le fuselage du giravion sous l'effet de ce vent. Des opérations de chargement ou bien de déchargement du giravion peuvent alors se dérouler sans être gênées par les pales du rotor principal.

Cela peut également être nécessaire dans le cas d'opérations spécifiques de maintenance ou bien afin de contrôler le fonctionnement du rotor principal, du rotor arrière anticouple ou bien des hélices du giravion le cas échéant.

Le rotor principal peut aussi être maintenu en rotation pour raison de sécurité, suite à un atterrissage du giravion afin de faciliter un décollage d'urgence du giravion.

Usuellement, l'énergie nécessaire à la rotation du rotor principal, du rotor arrière anticouple ou bien des hélices est fournie entièrement par au moins un moteur thermique de l'installation motrice du giravion. En conséquence, au sol, la majeure partie du bruit émis par le giravion est générée par chaque moteur thermique et peut être très gênante pour les personnes situées à proximité du giravion, pour les passagers du giravion, ainsi que pour le voisinage des aéroports.

Par ailleurs, on connait le document EP 2148066 qui décrit une installation motrice hybride munie d'au moins un turbomoteur et d'au moins une machine électrique et destinée à entraîner en rotation une boîte de transmission mécanique de puissance. Chaque machine électrique permet en mode moteur de transformer une énergie électrique en une énergie mécanique afin de participer à l'entraînement de la boîte de transmission mécanique de puissance en complément de chaque turbomoteur. Chaque machine électrique peut aussi fonctionner au cours d'un vol en mode générateur afin de transformer une énergie mécanique en une énergie électrique et de générer de la sorte un courant électrique. Une machine électrique peut également, en mode moteur, assurer le démarrage d'un turbomoteur.

Le document FR 3036235 décrit un procédé de fonctionnement d'une installation motrice hybride comportant au moins deux moteurs thermiques et un moteur électrique, cette installation motrice hybride étant destinée à entraîner en rotation un rotor d'un giravion. Ce procédé détermine sous quelles conditions le moteur électrique entraîne le rotor conjointement à un ou plusieurs moteurs thermiques. En particulier, le moteur électrique ne peut être utilisé que dans des phases de vol prédéterminées, et donc lorsque le giravion ne repose pas sur le sol, et lorsqu'au moins un moteur thermique est considéré en panne.

L'art antérieur comporte le document EP 2571764 décrivant un giravion muni d'une installation motrice hybride comportant un moteur thermique, un moteur électrique et un générateur électrique. Le moteur thermique entraîne en rotation le générateur électrique afin de générer une énergie électrique utilisée pour alimenter électriquement le moteur électrique. Ce moteur électrique est relié au rotor principal du giravion afin de l'entraîner en rotation. L'installation motrice hybride peut aussi comporter un ou plusieurs dispositifs de stockage d'énergie électrique afin, d'une part, de stocker au moins une partie de l'énergie électrique générée par le générateur électrique et, d'autre part, d'alimenter le moteur électrique indépendamment du fonctionnement du moteur thermique.

L'art antérieur comporte également le document FR 3003514 décrivant plusieurs architectures d'une installation motrice hybride pour aéronef, le document US 2018/0009542 décrivant une installation motrice hybride ainsi que les documents US 2011/024555 et US 2012/043413 décrivant des aéronefs comportant des rotors orientables.

La présente invention a alors pour objet d'optimiser le bruit généré au sol par un giravion afin par exemple, d'une part, d'améliorer le confort du personnel de maintenance et des passagers du giravion et, d'autre part, de limiter la génération de bruit pouvant être gênant pour l'environnement du giravion, notamment en milieu urbain ou périurbain. Dans ce but, le giravion utilise une installation motrice hybride comportant une source d'énergie mécanique complémentaire aux moteurs thermiques, comportant en particulier au moins une machine électrique associée à une source d'énergie électrique afin d'entraîner en rotation le rotor principal du giravion au sol.

La présente invention est définie par la revendication 1 et concerne un procédé d'optimisation du bruit généré par un giravion au sol. Ce giravion comporte par exemple :
- une installation motrice hybride munie d'au moins un moteur thermique et d'au moins une machine électrique,
- au moins un rotor entrainé en rotation par l'installation motrice hybride,
- un système de gestion de l'installation motrice hybride muni d'un calculateur, d'au moins un boîtier de contrôle dudit au moins un moteur thermique et d'un dispositif de commande de chaque machine électrique assurant le contrôle et la gestion du fonctionnement de ladite au moins une machine électrique, et
- au moins une source d'énergie électrique alimentant électriquement ladite au moins une machine électrique par

l'intermédiaire d'un réseau électrique du giravion.

Le procédé d'optimisation du bruit généré par un giravion au sol selon l'invention est remarquable en ce qu'il comporte les étapes suivantes :
- premier contrôle que le giravion est au sol par un dispositif de détection,
- deuxième contrôle, par un boîtier de contrôle, de l'état démarré ou arrêté de chaque moteur thermique et de son régime le cas échéant,
- troisième contrôle, par un dispositif de commande, de l'état démarré ou arrêté de chaque machine électrique et de son régime le cas échéant,
- première commande, par l'intermédiaire du boîtier de contrôle, d'au moins un moteur thermique parmi le ou les moteurs thermiques dont l'état est démarré, si le giravion est au sol, de sorte à piloter un régime de cet au moins un moteur thermique pour atteindre un régime prédéterminé dudit au moins un moteur thermique dit « régime silencieux »,
- deuxième commande, par l'intermédiaire du dispositif de commande, d'au moins une machine électrique de sorte que cette au moins une machine électrique délivre une puissance mécanique pour entraîner chaque rotor, et
- une détermination par un anémomètre d'une vitesse du vent autour dudit giravion, et si ladite vitesse dudit vent est supérieure à une limite prédéterminée, ladite deuxième commande d'au moins une machine électrique n'est pas réalisée ou bien est arrêtée.

Le procédé selon l'invention permet ainsi une mise en rotation de chaque rotor du giravion, en particulier un rotor principal, principalement par l'intermédiaire d'au moins une machine électrique, en limitant ainsi le niveau sonore du bruit généré par le giravion, et par son installation motrice hybride en particulier. En conséquence, les nuisances sonores du giravion au sol sont réduites.

Ce procédé peut être exécuté après un ordre d'un pilote du giravion ou bien du personnel de maintenance demandant une rotation silencieuse de chaque rotor, par exemple par l'intermédiaire d'un interrupteur ou d'un bouton présent sur le tableau de bord du giravion ou bien sur un tableau électrique du giravion dédié à la maintenance.

Chaque machine électrique de l'installation motrice hybride du giravion forme avec au moins une source d'énergie électrique une source d'énergie mécanique complémentaire susceptible d'entraîner en rotation chaque rotor du giravion, notamment par l'intermédiaire d'une boîte de transmission mécanique de puissance de l'installation motrice hybride. De la sorte, chaque machine électrique permet avantageusement d'entraîner chaque rotor du giravion en limitant la génération de bruit susceptible d'être gênant pour l'environnement du giravion.

De la sorte, chaque machine électrique permet de suppléer au moins un moteur thermique pour entraîner en rotation chaque rotor lorsque le giravion est au sol. En conséquence, au moins un moteur thermique de l'installation motrice hybride peut être en régime réduit, par exemple ralenti, voire arrêté, chaque rotor du giravion étant toujours entraîné en rotation par au moins une machine électrique de sorte à réduire ou à supprimer avantageusement le bruit généré par chaque moteur thermique.

Le premier contrôle du procédé selon l'invention permet de surveiller l'état du giravion et en particulier de définir si le giravion est bien au sol, ou bien si le giravion est en vol. En effet, le procédé selon l'invention concerne uniquement un giravion posé au sol. En conséquence, le procédé d'optimisation du bruit généré par un giravion au sol ne fournit aucune réduction de bruit lorsque le giravion n'est pas au sol. Ce premier contrôle est effectué par l'intermédiaire d'un dispositif de détection du giravion capable de déterminer si le giravion est au sol. Ce dispositif de détection comporte par exemple un capteur de pression dans le train d'atterrissage ou bien un système de mesure des efforts dans le train d'atterrissage susceptible de détecter ainsi si le train d'atterrissage est en contact avec le sol. Ce dispositif de détection peut aussi comporter un système de mesure de proximité au sol ou bien un radioaltimètre.

Ce premier contrôle peut aussi être effectué par un pilote du giravion par l'intermédiaire d'un interrupteur ou d'un bouton présent sur le tableau de bord du giravion par exemple.

Le deuxième contrôle de l'état de chaque moteur thermique permet de surveiller l'état de chaque moteur thermique et de déterminer en particulier si chaque moteur thermique de l'installation motrice hybride est à un état démarré ou bien à un état arrêté. De plus, ce deuxième contrôle permet, lorsqu'au moins un moteur thermique est à l'état démarré, de déterminer les caractéristiques de fonctionnement de chaque moteur thermique à l'état démarré, en particulier le couple développé, le régime de fonctionnement et/ou la puissance mécanique fournie.

L'état d'un moteur thermique de l'installation motrice hybride est contrôlé par exemple par l'intermédiaire d'un boîtier de contrôle associé à ce moteur thermique.

Le troisième contrôle de l'état de chaque machine électrique permet, à l'instar du deuxième contrôle, de surveiller l'état de chaque machine électrique de l'installation motrice hybride et de déterminer en particulier si chaque machine électrique est à un état démarré ou bien à un état arrêté. De plus, ce troisième contrôle permet, lorsqu'au moins une machine électrique est à l'état démarré, de déterminer les caractéristiques de fonctionnement de cette au moins une machine électrique à l'état démarré, en particulier le couple développé, le régime de fonctionnement et la puissance mécanique fournie.

Dans le cadre de l'invention, une machine électrique est considérée à l'état démarré dés qu'elle est alimentée électriquement, que cette machine électrique délivre une puissance mécanique ou bien ne délivre aucune puissance mécanique. De fait, une machine électrique est considérée à l'état arrêté lorsque cette machine électrique n'est pas alimentée électriquement.

L'état d'une machine électrique de l'installation motrice hybride est contrôlé par exemple par l'intermédiaire d'un dispositif de commande associé à cette machine électrique.

En outre, dans le cadre de l'invention, le régime de fonctionnement d'un moteur thermique ou d'une machine électrique définit sa vitesse de rotation.

Ces trois étapes de contrôle peuvent être réalisées de façon séquentielle. Toutefois, un mode de réalisation préféré du procédé selon l'invention prévoit la réalisation de ces étapes de contrôle en parallèle, de façon sensiblement simultanée. Dans le cas où ces trois étapes de contrôle sont réalisées de façon séquentielle, il peut être préférable d'effectuer le premier contrôle en premier afin éventuellement de ne pas réaliser les deux autres étapes de contrôle si le giravion ne repose pas sur le sol, bien que des enchaînements différents de ces étapes soient possibles.

Ensuite, si la présence au sol du giravion est confirmée par le premier contrôle, les étapes suivantes du procédé selon l'invention peuvent être exécutées.

Tout d'abord, si au moins un moteur thermique est détecté démarré, une première commande d'au moins un moteur thermique parmi le ou les moteurs thermiques dont l'état est démarré est réalisée. Cette première commande d'au moins un moteur thermique vise à optimiser et, en conséquence, à réduire si besoin le niveau sonore généré par le giravion, et par son installation motrice hybride en particulier. Dans ce but, la première commande d'au moins un moteur thermique permet de piloter le régime de ce moteur thermique pour atteindre un régime silencieux prédéterminé de ce moteur thermique, par exemple par l'intermédiaire du boîtier de contrôle associé à ce moteur thermique.

Si le giravion comporte un seul moteur thermique ou bien si un seul moteur thermique est détecté à l'état démarré, la première commande d'au moins un moteur thermique est appliquée à ce seul moteur thermique dont l'état est démarré. La première commande pilote alors le régime de ce seul moteur thermique pour atteindre le régime silencieux prédéterminé.

Si le giravion comporte plusieurs moteurs thermiques détectés à l'état démarré, au moins deux alternatives sont envisageables.

Selon une première alternative, la première commande d'au moins un moteur thermique est appliquée à tous les moteurs thermiques dont l'état est démarré. La première commande pilote alors le régime de tous ces moteurs thermiques pour atteindre le régime silencieux prédéterminé.

Selon une seconde alternative, lorsque l'installation motrice comporte au moins deux moteurs thermiques détectés à l'état démarré, la première commande d'au moins un moteur thermique est appliquée au moteur thermique détecté à l'état démarré et situé dans une zone spécifique du giravion ou bien à proximité de cette zone spécifique dans laquelle le niveau sonore du bruit généré par le giravion doit être réduit. La première commande pilote alors le régime de ce seul moteur thermique pour atteindre le régime silencieux prédéterminé.

En effet, le bruit généré par l'installation motrice peut être réduit en priorité dans une zone spécifique du giravion dans laquelle par exemple une opération de maintenance est engagée ou bien par laquelle les passagers du giravion embarquent ou bien descendent du giravion. L'information de cette zone spécifique où le niveau sonore du bruit généré par le giravion doit être réduit est déterminée, si nécessaire, lors de l'ordre d'exécution du procédé par un pilote du giravion ou bien le personnel de maintenance par exemple par l'intermédiaire d'un interrupteur ou d'un bouton présent sur le tableau de bord du giravion ou bien sur un tableau électrique du giravion.

Par exemple, lorsque au moins deux moteurs thermiques détectés à l'état démarré sont agencés transversalement côte à côte, la première commande d'au moins un moteur thermique est appliquée au seul moteur thermique détecté à l'état démarré et situé d'un côté spécifique du giravion où le niveau sonore du bruit généré par le giravion doit être réduit. La première commande pilote alors le régime de ce seul moteur thermique pour atteindre le régime silencieux prédéterminé.

Le régime silencieux prédéterminé d'un moteur thermique permet de maintenir le moteur thermique à l'état démarré, mais à un régime silencieux prédéterminé non nul. Ce régime silencieux prédéterminé est un régime du moteur thermique de préférence réduit permettant de réduire fortement le bruit généré par le moteur thermique, tout en maintenant avantageusement le moteur thermique à l'état démarré et, de fait, prêt rapidement à un éventuel décollage du giravion.

Parallèlement à cette première commande d'au moins un moteur thermique détecté à l'état démarré, une deuxième commande de chaque machine électrique est réalisée. Chaque machine électrique délivre alors une puissance mécanique afin d'entraîner chaque rotor du giravion en rotation. La fourniture d'une puissance mécanique par chaque machine électrique est par exemple réalisée et régulée selon une consigne de vitesse de rotation d'un rotor, en particulier le rotor principal du giravion, et la puissance mécanique délivrée par au moins un moteur thermique à l'état démarré. De la sorte, chaque machine électrique fournit une puissance mécanique complémentaire à la puissance mécanique fournie par au moins un moteur thermique détecté à l'état démarré afin d'entraîner chaque rotor du giravion, tout en limitant avantageusement le bruit généré par l'installation motrice hybride.

Dans ce but, la deuxième commande de chaque machine électrique permet de piloter, par exemple par l'intermédiaire du dispositif de commande associé à cette machine électrique, le régime de cette machine électrique et la puissance mécanique délivrée par cette machine électrique afin de respecter la consigne de vitesse de rotation d'un rotor, en particulier le rotor principal.

La fourniture d'une puissance mécanique par une machine électrique peut nécessiter que cette machine électrique soit préalablement alimentée au cours de la deuxième commande si cette machine électrique est à l'état arrêté.

Par ailleurs, dans le cas où aucun moteur thermique de l'installation motrice hybride n'a été détecté à l'état démarré, l'étape de la première commande d'au moins un moteur thermique n'est pas réalisée, et l'étape de deuxième commande de chaque machine électrique est effectuée afin que chaque machine électrique entraîne seule en rotation chaque rotor du giravion selon la consigne de vitesse de rotation d'un rotor.

Dans le cadre de l'invention, au moins une machine électrique de l'installation motrice hybride est un moteur électrique remplissant uniquement une fonction motrice ou bien une machine réversible susceptible de fonctionner en mode moteur ou bien en mode générateur afin de fournir une puissance mécanique à chaque rotor du giravion. La puissance maximale fournie par chaque machine électrique de l'installation motrice hybride du giravion sans dégradation de celle-ci peut être comprise typiquement entre 15 et 25% de la puissance maximale fournie par chaque moteur thermique de cette installation motrice hybride afin de limiter notamment la masse de la machine électrique.

En outre, un moteur thermique peut être un moteur à piston ou bien, plus généralement sur les giravions, un turbomoteur comportant un générateur de gaz et une turbine libre.

Une machine électrique peut être implantée de façon permanente au sein de l'installation motrice hybride du giravion et peut être placée en différentes positions au sein de cette installation motrice hybride du giravion. Le document FR 3039614 décrit notamment des implantations d'une machine électrique liée à une boîte de transmission mécanique de puissance de l'installation motrice hybride, au moteur thermique ou bien directement au rotor principal du giravion.

Par exemple, lorsque le moteur thermique est un turbomoteur, une machine électrique peut être implantée entre la turbine libre et la boîte de transmission mécanique de puissance. Cette machine électrique fournit ainsi une puissance mécanique à la boîte de transmission mécanique de puissance.

Selon un autre exemple, une machine électrique de puissance peut être implantée sur une entrée spécifique et dédiée de la boîte de transmission mécanique de puissance et fournit ainsi une puissance mécanique directement à la boîte de transmission mécanique de puissance.

Une machine électrique peut aussi être implantée sur le moyeu du rotor principal du giravion afin de fournir une puissance mécanique directement au moyeu du rotor principal.

Une machine électrique peut aussi être implantée de façon temporaire et ponctuelle en tant que dispositif d'entraînement temporaire utilisé au sol.

La machine électrique peut ainsi être disposée sur une prise mécanique spécifique du giravion permettant l'entraînement en rotation du rotor principal par la machine électrique. Cette prise mécanique spécifique est agencée sur une chaîne de transmission mécanique de chaque rotor. En particulier, cette prise mécanique est une prise mécanique externe de la boîte de transmission mécanique de puissance. La machine électrique peut également être installée en lieu et place d'un moteur thermique préalablement retiré du giravion dans le cadre d'une opération de maintenance.

Dans ce cas, le procédé selon l'invention comporte une première étape préalable d'agencement d'une machine électrique en lieu et place d'un moteur thermique ou bien sur une prise mécanique du giravion. Cette première étape préalable est réalisée avant les étapes précédemment citées.

En outre, chaque machine électrique de l'installation motrice hybride du giravion peut être alimentée par une ou plusieurs sources d'énergie électrique.

Une source d'énergie électrique peut être embarquée de façon permanente dans le giravion. Une source d'énergie électrique peut être par exemple un dispositif de stockage d'une énergie électrique, tel qu'une batterie électrique ou bien une pile à combustible. Une source d'énergie électrique peut également être un générateur électrique entraîné en rotation par un moteur thermique dédié ou bien un moteur thermique de l'installation motrice hybride du giravion.

Une source d'énergie électrique peut aussi être externe au giravion et reliée au giravion au sol de façon temporaire et ponctuelle par une prise électrique externe, désignée également « prise de parc ». La prise de parc est reliée électriquement à au moins une machine électrique par l'intermédiaire du réseau électrique du giravion. Une telle source d'énergie électrique externe peut être par exemple un dispositif de stockage d'une énergie électrique ou bien un générateur électrique entraîné en rotation par un moteur thermique dédié.

Dans ce cas, le procédé selon l'invention comporte une seconde étape préalable de branchement d'une source d'énergie électrique extérieure au giravion sur une prise de parc du giravion. Cette seconde étape préalable est également réalisée avant les étapes précédemment citées.

Par ailleurs, l'installation motrice hybride peut comporter un premier dispositif d'accouplement agencé entre au moins un moteur thermique et une boîte de transmission mécanique de puissance. L'installation motrice hybride peut également comporter un second dispositif d'accouplement agencé entre au moins une machine électrique et une chaîne de transmission mécanique entraînant en rotation chaque rotor du giravion, en particulier entre au moins une machine électrique et le moyeu du rotor principal du giravion.

Le premier dispositif d'accouplement permet ainsi d'éviter d'entraîner en rotation le moteur thermique concerné lorsque chaque rotor du giravion est entraîné en rotation uniquement par au moins une machine électrique. De la même façon, le second dispositif d'accouplement permet d'éviter d'entraîner en rotation la machine électrique concernée lorsque chaque rotor du giravion est entraîné en rotation uniquement par au moins un moteur thermique. Le premier dispositif d'accouplement et le second dispositif d'accouplement comporte par exemple un embrayage ou bien une roue libre.

En outre, le système de gestion de l'installation motrice hybride comporte un calculateur muni par exemple d'une mémoire et d'un processeur. La mémoire peut stocker des instructions et le calculateur permet l'exécution des étapes du procédé d'optimisation du bruit généré par un giravion au sol selon l'invention en fonction notamment de ces instructions.

Le calculateur peut aussi comporter un circuit intégré, un système programmable, un ou plusieurs circuits logiques ou bien tout dispositif équivalent, ces exemples ne limitant pas la portée donnée à l'expression « calculateur ».

Le système de gestion de l'installation motrice hybride peut également comporter au moins un boîtier de contrôle assurant le contrôle et la gestion du fonctionnement de chaque moteur thermique et au moins un dispositif de commande assurant le contrôle et la gestion du fonctionnement de chaque machine électrique.

Un boîtier de contrôle permet notamment de démarrer et d'arrêter un moteur thermique ainsi que de commander et modifier le régime de ce moteur thermique afin de réguler son fonctionnement. Le boîtier de contrôle comporte par exemple une unité de contrôle connue dans le domaine des giravions sous l'acronyme *EECU* pour la désignation en langue anglaise « Electronic Engine Control Unit » ou bien un calculateur moteur connu sous l'acronyme *FADEC* pour la désignation en langue anglaise « Full Authority Digital Engine Control ».

Un dispositif de commande permet notamment de piloter l'alimentation électrique d'une machine électrique et la coupure de cette alimentation électrique ainsi que de commander et modifier le régime de cette machine électrique afin de réguler son fonctionnement. Un tel dispositif de commande comporte un calculateur et est par exemple un contrôleur de vitesse électronique désigné par l'acronyme ESC pour la désignation en langue anglaise « Electronic Speed Controller ». Le contrôleur de vitesse électronique ESC peut comporter un circuit électronique interne désigné par l'acronyme BEC pour la désignation en langue anglaise « Battery Eliminator Circuit » permettant de réguler la tension électrique alimentant chaque machine électrique.

Par ailleurs, le procédé d'optimisation du bruit généré par un giravion au sol selon l'invention comporte une étape complémentaire de détermination de la vitesse du vent autour du giravion. Cette détermination est réalisée parallèlement aux étapes de contrôle et à la deuxième commande de chaque machine électrique. Cette détermination est réalisée par l'intermédiaire d'un anémomètre que comporte le giravion mesurant la vitesse du vent.

Si la vitesse du vent est supérieure à une limite prédéterminée, à savoir mémorisée, l'entraînement en rotation de chaque rotor par chaque machine électrique n'est pas réalisée ou bien est arrêtée le cas échéant afin d'éviter une dégradation de chaque machine électrique. En conséquence, la deuxième commande de chaque machine électrique n'est pas réalisée ou bien est arrêtée le cas échéant. Un pilote du giravion peut aussi décider de ne pas réaliser ou bien d'arrêter l'entraînement en rotation de chaque rotor par chaque machine électrique s'il estime la vitesse du vent trop importante après avoir consulté typiquement une manche à air située à proximité du giravion. Le pilote du giravion transmet sa décision par exemple par l'intermédiaire d'un interrupteur ou d'un bouton présent sur le tableau de bord du giravion.

L'arrêt de la rotation de chaque rotor peut être obtenu par l'arrêt de la fourniture d'une puissance mécanique par chaque machine électrique, la coupure de l'alimentation électrique de chaque machine électrique, voire l'arrêt complet du procédé selon l'invention. La limite prédéterminée est par exemple égale à 30 nœuds, un nœud étant égal à 1.852 kilomètres par heure.

Le procédé peut aussi comporter un quatrième contrôle du réseau électrique afin de contrôler si le réseau électrique du giravion est capable d'alimenter chaque machine électrique. Le réseau électrique est considéré capable d'alimenter chaque machine électrique s'il peut fournir une puissance électrique suffisante et dispose d'une énergie électrique suffisante pour alimenter chaque machine électrique afin que chaque machine électrique délivre une puissance mécanique suffisante. La puissance électrique du réseau électrique est caractérisée par la tension et l'intensité du courant électrique que ce réseau peut fournir à chaque machine électrique. L'énergie électrique peut être caractérisée par la capacité de la source d'énergie électrique à fournir une puissance électrique pendant une certaine durée. Lorsque cette source d'énergie électrique est une batterie, l'énergie électrique de la batterie est caractérisée par sa capacité électrique et sa charge en tension électrique.

Si le réseau électrique est capable d'alimenter chaque machine électrique, une autorisation d'alimentation de chaque machine électrique est alors délivrée. Cette autorisation d'alimentation peut notamment être une condition nécessaire à la réalisation de la première commande d'au moins un moteur thermique et de la deuxième commande de chaque machine électrique.

Le procédé peut aussi comporter une étape de démarrage anticipé de chaque machine électrique consécutif à ce quatrième contrôle du réseau électrique. Au cours de l'étape de démarrage anticipé, chaque machine électrique est démarrée dès que l'autorisation d'alimentation est délivrée, sans transmettre de puissance mécanique au rotor. De la sorte, chaque machine électrique peut fournir de façon quasi instantanée une puissance mécanique dès que la deuxième commande est réalisée.

Le procédé d'optimisation du bruit selon l'invention peut aussi comporter une étape de protection munie de sous-étapes. Une première sous-étape de détermination de la vitesse de rotation d'au moins un rotor est réalisée, puis, si la vitesse de rotation d'un rotor est supérieure à une vitesse prédéterminée, une seconde sous-étape d'arrêt de chaque machine électrique est réalisée. Cette étape complémentaire de protection permet ainsi d'éviter qu'au moins un rotor atteigne une survitesse lorsqu'il est entraîné par chaque machine électrique.

En outre, parallèlement à la deuxième commande de chaque machine électrique, le quatrième contrôle du réseau électrique peut aussi être réalisé afin surveiller le réseau électrique du giravion de sorte à déterminer si le réseau électrique est toujours en capacité d'alimenter électriquement chaque machine électrique, et en particulier si chaque source d'énergie électrique ne dispose pas d'une énergie électrique suffisante. Si le quatrième contrôle du réseau électrique détermine que le réseau électrique n'a pas une capacité électrique suffisante, un ordre d'arrêt de chaque machine électrique est généré et une étape d'arrêt de machine électrique est réalisée.

Par ailleurs, le procédé d'optimisation du bruit selon l'invention peut aussi comporter des étapes supplémentaires pour l'arrêt de chaque machine électrique et pour l'entraînement de chaque rotor par chaque moteur thermique avant d'engager une procédure de décollage du giravion.

Le deuxième contrôle de l'état de chaque moteur thermique est de nouveau réalisé afin de déterminer si chaque moteur thermique de l'installation motrice hybride du giravion est à un état démarré ou bien à un état arrêté ainsi que de déterminer le régime de chaque moteur thermique.

Si au moins un moteur thermique est à l'état arrêté, un ordre de démarrage est généré et une étape de démarrage de ce moteur thermique est réalisée.

Le procédé d'optimisation du bruit selon l'invention comporte ensuite une étape de régulation de chaque moteur thermique de l'installation motrice hybride afin d'amener chaque moteur thermique à un état lui permettant d'entraîner, en respectant une consigne de vitesse de rotation prédéterminée, au moins un rotor. Dès que chaque moteur thermique atteint l'état où la consigne de vitesse de rotation prédéterminée est respectée, un ordre d'arrêt de chaque machine électrique est généré.

Une étape d'arrêt de chaque machine électrique est enfin réalisée permettant l'arrêt de chaque machine électrique. La consigne de vitesse de rotation prédéterminée est respectée car la puissance fournie par les moteurs thermiques augmente progressivement et parallèlement à la baisse de la puissance fournie par la machine électrique jusqu'à son arrêt. Au cours de cette étape d'arrêt de chaque machine électrique, le régime de chaque machine électrique est par exemple réduit jusqu'à une vitesse de rotation nulle et l'alimentation électrique de chaque machine électrique est alors coupée.

Ces étapes complémentaires permettent ainsi de basculer d'une rotation silencieuse de chaque rotor vers une phase de décollage, sans arrêter la rotation de chaque rotor et, de fait, en optimisant l'énergie consommée pour entrer dans la phase de décollage du giravion.

L'invention et ses avantages apparaîtront avec plus de détails dans le cadre de la description qui suit avec des exemples donnés à titre illustratif en référence aux figures annexées qui représentent :
- la figure 1, un giravion, et
- la figure 2, un schéma synoptique d'un procédé d'optimisation du bruit généré par un giravion au sol.

Les éléments présents dans plusieurs figures distinctes sont affectés d'une seule et même référence.

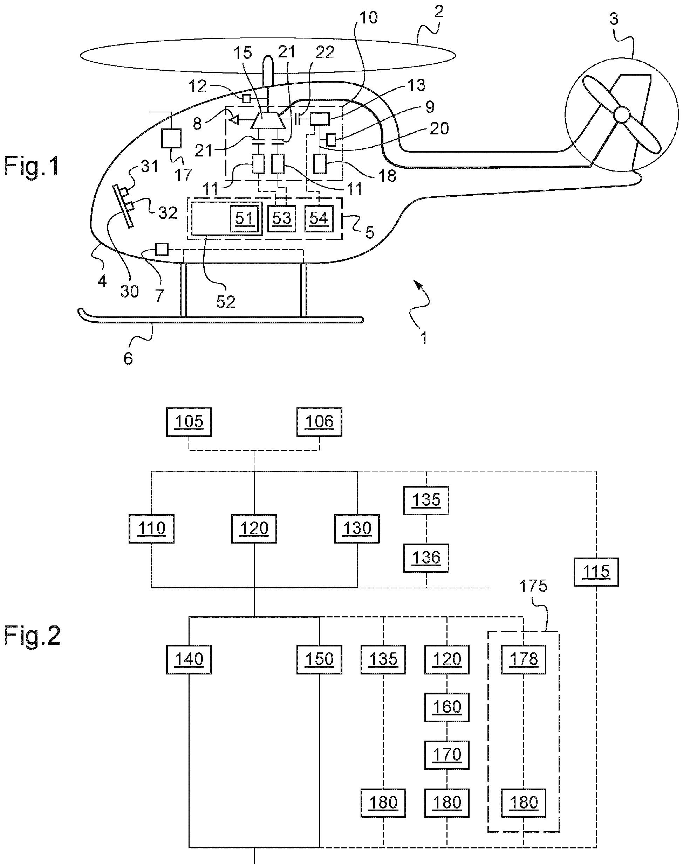

[Fig 1] Le giravion 1 représenté sur la figure 1 comporte un fuselage 4, un train d'atterrissage 6 à patins, une installation motrice hybride 10 et deux rotors 2,3 entraînés en rotation par l'installation motrice hybride 10. Les deux rotors 2,3 sont plus précisément un rotor principal 2 agencé au dessus du fuselage 4 et un rotor arrière anticouple 3 agencé sur une poutre de queue du giravion 1.

L'installation motrice hybride 10 comporte deux moteurs thermiques 11, une machine électrique 13 et une boîte de transmission mécanique de puissance 15. Les deux moteurs thermiques 11 et la machine électrique 13 sont reliés mécaniquement à la boîte de transmission mécanique de puissance 15. La boîte de transmission mécanique de puissance 15 est reliée mécaniquement aux deux rotors 2,3. De la sorte, les deux moteurs thermiques 11 et la machine électrique 13 peuvent entraîner en rotation conjointement ou bien indépendamment les uns des autres les deux rotors 2,3 par l'intermédiaire de la boîte de transmission mécanique de puissance 15.

La boîte de transmission mécanique de puissance 15 peut également comporter une prise mécanique 8 externe destinée à être reliée à un dispositif d'entraînement externe, telle une machine électrique, dédié à la mise en mouvement de la boîte de transmission mécanique de puissance 15.

L'installation motrice hybride 10 peut aussi comporter des dispositifs d'accouplement 21,22, tels qu'un embrayage ou une roue libre par exemple, reliant respectivement les moteurs thermiques 11 et la machine électrique 13 à la boîte de transmission mécanique de puissance 15.

Ces dispositifs d'accouplement 21,22 permettent notamment que chaque moteur thermique 11 et la machine électrique 13 soient capable de fournir une puissance mécanique à la boîte de transmission mécanique de puissance 15 alors que la boîte de transmission mécanique de puissance 15 ne peut pas fournir une puissance mécanique aux moteurs thermiques 11 et à la machine électrique 13.

Le giravion 1 comporte aussi une source d'énergie électrique 18 alimentant électriquement la machine électrique 13 via un réseau électrique 20 ainsi qu'un système de gestion 5 de l'installation motrice hybride 10. Le système de gestion 5 comporte par exemple un calculateur 52 muni d'une mémoire 51, un boîtier de contrôle 53 des deux moteurs thermiques 11 et un dispositif de commande 54 de la machine électrique 13.

Le boîtier de contrôle 53 a pour fonction de contrôler et gérer le fonctionnement de chaque moteur thermique 11, et en particulier commander le démarrage, l'arrêt et les différents régimes de chaque moteur thermique 11 ainsi que de réguler son régime. Le dispositif de commande 54 a quant à lui pour fonction de contrôler et gérer le fonctionnement de la machine électrique 13, et en particulier de piloter l'alimentation électrique de la machine électrique 13 et la coupure de cette alimentation électrique ainsi que de réguler son régime.

Le giravion 1 comporte également une prise de parc 9 externe reliée électriquement à la machine électrique 13 via le réseau électrique 20. Une source d'énergie électrique externe au giravion 1 peut être connectée à la prise de parc 9 afin d'alimenter électriquement la machine électrique 13.

Le giravion 1 comporte aussi un dispositif de détection 7 capable de déterminer si ledit giravion 1 repose sur le sol. Ce dispositif de détection 7 comporte par exemple un capteur de pression dans le train d'atterrissage 6 et/ou un système de mesure des efforts dans le train d'atterrissage 6 susceptible de détecter ainsi si le train d'atterrissage 6 est en contact ou non avec le sol.

Le giravion 1 comporte aussi un anémomètre 17 afin de mesurer la vitesse du vent autour du giravion 1, ainsi qu'un dispositif de détermination 12 de la vitesse de rotation du rotor principal 2. Le giravion 1 comporte enfin un tableau de bord 30 muni de plusieurs boutons 31,32.

[Fig 2] La mémoire 51 stocke des instructions permettant notamment d'exécuter le procédé d'optimisation du bruit généré par un giravion au sol dont un schéma synoptique est représenté sur la figure 2. Le calculateur 52, formé par exemple par un processeur ou bien un circuit logique, permet l'exécution des étapes de ce procédé.

Ce procédé d'optimisation du bruit généré par un giravion au sol peut être exécuté suite à un ordre d'un pilote du giravion 1 ou bien du personnel de maintenance demandant une rotation silencieuse de chaque rotor 2,3 du giravion 1, par exemple par l'intermédiaire d'un premier bouton 31 du tableau de bord 30.

Tout d'abord, trois étapes de contrôle 110,120,130 sont réalisées de préférence en parallèle, bien qu'elles puissent être réalisées de façon séquentielle.

Un premier contrôle 110 permet de définir si le giravion 1 repose au sol ou non. Ce premier contrôle 110 est réalisé par l'intermédiaire du dispositif de détection 7. Le dispositif de détection 7 fournit alors un premier signal électrique au calculateur 52 du système de gestion 5 contenant l'information que le giravion 1 repose sur le sol ou bien qu'il ne repose pas sur le sol.

Un deuxième contrôle 120 permet de surveiller les moteurs thermiques 11 et de déterminer si ces moteurs thermiques 11 sont à un état démarré ou à un état arrêté ainsi que leurs régimes respectifs. Ce deuxième contrôle 120 est réalisé par l'intermédiaire du boîtier de contrôle 53. Le boîtier de contrôle 53 fournit alors un deuxième signal électrique au calculateur 52 du système de gestion 5 contenant l'information de l'état de chaque moteur thermique 11 et éventuellement de son régime.

Un troisième contrôle 130 permet de surveiller la machine électrique 13 et de déterminer si la machine électrique 13 est à un état démarré ou à un état arrêté ainsi que son régime. Ce troisième contrôle 130 est réalisé par l'intermédiaire du dispositif de commande 54. Le dispositif de commande 54 fournit alors un troisième signal électrique au calculateur 52 du système de gestion 5 contenant l'information de l'état de la machine électrique 13 et éventuellement de son régime.

Ensuite, si la présence au sol du giravion 1 est confirmée par le premier signal émis par le premier contrôle 110, une première commande 140 d'au moins un moteur thermique 11 et une deuxième commande 150 de la machine électrique 13 sont réalisées de sorte à entraîner chaque rotor 2,3 en rotation tout en limitant le bruit généré par l'installation motrice hybride 10 du giravion 1.

Tout d'abord, si le deuxième contrôle 120 a détecté qu'au moins un moteur thermique 11 est à l'état démarré, cette information étant transmise au calculateur 52 par le deuxième signal, la première commande 140 pilote le régime d'au moins un moteur thermique 11 à l'état démarré par l'intermédiaire du boîtier de contrôle 53 associé à ce moteur thermique 11 pour atteindre un régime prédéterminé dit « régime silencieux ». Le régime silencieux prédéterminé maintient aussi le moteur thermique 11 à l'état démarré, mais son régime étant alors réduit, par exemple à un régime de ralenti, permettant de réduire fortement le bruit généré.

Si un seul moteur thermique 11 est détecté à l'état démarré, la première commande 140 est appliquée à ce seul moteur thermique 11 qui est à l'état démarré.

Si les deux moteurs thermiques 11 du giravion 1 sont détectés à l'état démarré, deux alternatives sont à envisager. La première commande 140 peut alors être appliquée aux deux moteurs thermiques 11 à l'état démarré ou bien à un seul de ces deux moteurs thermiques 11 à l'état démarré afin d'atteindre le régime silencieux prédéterminé.

Les deux moteurs thermiques 11 de l'installation motrice hybride 10 peuvent être agencés transversalement côte à côte dans le giravion 1. De fait, quand une opération de maintenance est engagée sur un côté du giravion 1 ou bien que des passagers du giravion 1 embarquent ou bien descendent du giravion 1 sur un côté du giravion 1, il peut être intéressant de réduire uniquement le bruit généré par le moteur thermique 11 situé sur ce côté du giravion 1, afin de réduire les nuisances sonores pour le personnel de maintenance ou bien pour les passagers du giravion 1.

Le choix d'appliquer la première commande 140 à un seul moteur thermique 11 ou bien aux deux moteurs thermiques 11 et le choix du côté au niveau duquel réduire le bruit sont effectués par l'intermédiaire d'un second bouton 32 du tableau de bord 30.

La deuxième commande 150 de la machine électrique 13 est réalisée parallèlement à la première commande 140. La deuxième commande 150 pilote la machine électrique 13 par l'intermédiaire du dispositif de commande 54 de sorte que la machine électrique 13 fournisse une puissance mécanique complémentaire à la puissance mécanique fournie par chaque moteur thermique 11 afin d'entraîner en rotation chaque rotor 2,3 en respectant une consigne de vitesse de rotation du rotor principal 2.

En outre, si le deuxième contrôle 120 a détecté qu'aucun moteur thermique 11 n'est à l'état démarré, cette information étant transmise au calculateur 52 par le deuxième signal, la première commande 140 d'au moins un moteur thermique 11 n'est pas réalisée et uniquement la deuxième commande 150 de la machine électrique 13 est réalisée afin que chaque rotor 2,3 soit entraîné en rotation par la machine électrique 13. La machine électrique 13 fournit alors seule la puissance mécanique nécessaire à la rotation de chaque rotor 2,3 en respectant la consigne de vitesse de rotation.

Par ailleurs, le procédé d'optimisation du bruit généré par un giravion 1 comporte également une étape de détermination 115 de la vitesse du vent autour du giravion 1. Cette détermination 115 de la vitesse du vent autour du giravion 1 est effectuée par l'intermédiaire de l'anémomètre 17. Si la vitesse du vent contrôlée au cours de la détermination 115 est supérieure à une limite prédéterminée, la deuxième commande 150 de la machine électrique 13 est arrêtée afin d'éviter une dégradation de la machine électrique 13. Cette détermination 115 de la vitesse du vent autour du giravion 1 est réalisée parallèlement aux étapes de contrôle 110,120,130 et à la deuxième commande 150 de la machine électrique 13.

Le procédé d'optimisation du bruit généré par un giravion 1 peut aussi comporter deux étapes optionnelles de quatrième contrôle 135 du réseau électrique 20 et de démarrage anticipé 136 de la machine électrique 13 réalisée parallèle aux étapes de contrôle 110,120,130.

Le quatrième contrôle 135 du réseau électrique 20 permet de contrôler que le réseau électrique 20 est capable d'alimenter la machine électrique 13, en surveillant notamment la puissance électrique et l'énergie électrique que peut délivrer le réseau électrique 20. Le démarrage anticipé 136 de la machine électrique 13 est effectué dès qu'une autorisation d'alimentation est délivrée suite au quatrième contrôle 135. La machine électrique 13 est ainsi démarrée, sans transmettre de puissance mécanique à chaque rotor 2,3 en anticipation de la réalisation de la deuxième commande 150 de la machine électrique 13.

Le procédé d'optimisation du bruit peut aussi comporter une étape optionnelle de protection 175 munie de deux sous-étapes, à savoir une première sous-étape de détermination 178 de la vitesse de rotation du rotor principal 2 et une seconde sous-étape d'arrêt 180 de la machine électrique 13. La première sous-étape de détermination 178 permet de déterminer une vitesse de rotation du rotor principal 2 par l'intermédiaire du dispositif de détermination 12. Ensuite, si la vitesse de rotation du rotor principal 2 est supérieure à une vitesse prédéterminée, la seconde sous-étape d'arrêt 180 de la machine électrique 13 est réalisée afin d'éviter que le rotor principal 2 atteigne une survitesse.

En outre, le procédé d'optimisation du bruit selon l'invention peut aussi appliquer de façon optionnelle et parallèlement à la deuxième commande 150 de la machine électrique 13, le quatrième contrôle 135 du réseau électrique 20 puis l'arrêt 180 de la machine électrique 13 afin surveiller le réseau électrique 20 pendant cette deuxième commande 150. Ainsi, si le quatrième contrôle 135 détecte que le réseau électrique 20 n'est plus en capacité d'alimenter électriquement la machine électrique 13, l'étape d'arrêt 180 de la machine électrique 13 est réalisée.

Le procédé d'optimisation du bruit selon l'invention peut aussi appliquer de façon optionnelle des étapes supplémentaires 120,160,170,180 pour l'arrêt de la machine électrique 13 et pour l'entraînement de chaque rotor 2,3 par les deux moteurs thermiques 11 en préparation d'un décollage du giravion 1. Ces étapes supplémentaires sont réalisées parallèlement à la première commande 140 et à la deuxième commande 150.

Tout d'abord, le deuxième contrôle 120 de l'état démarré ou arrêté des deux moteurs thermiques 11 et de leurs régimes le cas échéant est réalisé de nouveau afin de déterminer l'état de chaque moteur thermique 11. Si au moins un moteur thermique 11 est à l'état arrêté, un démarrage 160 de cet au moins un moteur thermique 11 est réalisée.

Ensuite, une régulation 170 des deux moteurs thermiques 11 est effectuée afin que chaque moteur thermique 11 atteigne un régime permettant d'être prêt à entraîner le rotor principal 2 en respectant une consigne de vitesse de rotation prédéterminée. La consigne de vitesse de rotation prédéterminée du rotor principal 2 est respectée grâce à la puissance fournie par la machine électrique 13, en conséquence, les moteurs thermiques 11 sont prêts mais ne fournissent pas la puissance mécanique.

Enfin, un arrêt 180 de la machine électrique 13 est réalisé dès que chaque moteur thermique 11 atteigne un régime permettant d'entraîner le rotor principal 2. La consigne de vitesse de rotation prédéterminée du rotor principal 2 est respectée, les moteurs thermiques 11 pouvant alors entraîner chaque rotor 2,3 sans l'apport de puissance mécanique de la machine électrique 13.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

Notamment, un giravion 1 comportant plusieurs rotors principaux 2 de sustentation, par exemple un giravion 1 comportant quatre rotors principaux 2 de sustentation, peut appliquer le procédé d'optimisation du bruit généré par un giravion 1 au sol tel que décrit.

Il est bien sûr envisageable de remplacer un moyen décrit par un moyen équivalent sans sortir du cadre de la présente invention comme défini dans le jeu de revendications suivant.

## Revendications

1. Procédé d'optimisation du bruit généré par un giravion (1) au sol, ledit giravion (1) comportant :
- une installation motrice hybride (10) munie d'au moins un moteur thermique (11) et d'au moins une machine électrique (13),
- au moins un rotor (2,3) entrainé en rotation par ladite installation motrice hybride (10), et
- au moins une source d'énergie électrique (18) alimentant électriquement ladite au moins une machine électrique (13) par l'intermédiaire d'un réseau électrique (20),
**caractérisé en ce que** ledit procédé comporte les étapes suivantes :
- premier contrôle (110) que ledit giravion (1) est au sol par un dispositif de détection (7),
- deuxième contrôle (120), par un boîtier de contrôle (53), de l'état démarré ou arrêté dudit au moins un moteur thermique (11) et de son régime,
- troisième contrôle (130), par un dispositif de commande (54), de l'état démarré ou arrêté de ladite au moins une machine électrique (13) et de son régime,
- première commande (140), par l'intermédiaire dudit boîtier de contrôle (53), d'au moins un moteur thermique (11) parmi ledit au moins un moteur thermique (11) dont ledit état est démarré, si ledit giravion (1) est au sol, de sorte à piloter un régime dudit au moins un moteur thermique (11) jusqu'à atteindre un régime prédéterminé dudit au moins un moteur thermique (11) dit « régime silencieux », ledit régime silencieux étant un régime réduit dudit moteur thermique (11) permettant de réduire le bruit généré par ledit moteur thermique (11),
- deuxième commande (150) par l'intermédiaire dudit dispositif de commande (54), d'au moins une machine électrique (13) de sorte que ladite au moins une machine électrique (13) délivre une puissance mécanique pour entraîner ledit au moins un rotor (2,3) et,
- une détermination (115) par un anémomètre (17) d'une vitesse du vent autour dudit giravion (1), et si ladite vitesse dudit vent est supérieure à une limite prédéterminée, ladite deuxième commande (150) d'au moins une machine électrique (13) n'est pas réalisée ou bien est arrêtée.

2. Procédé selon la revendication 1,
**caractérisé en ce que** ledit procédé comporte un quatrième contrôle (135) dudit réseau électrique (20) vérifiant que ledit réseau électrique (20) est capable d'alimenter au moins une machine électrique (13), une autorisation d'alimentation de ladite au moins une machine électrique (13) étant délivrée si ledit réseau électrique (20) est capable d'alimenter ladite au moins une machine électrique (13), ladite autorisation d'alimentation étant nécessaire pour réaliser ladite deuxième commande (150) de ladite au moins une machine électrique (13).

3. Procédé selon la revendication 2,
**caractérisé en ce que** ledit procédé comporte une étape de démarrage anticipé (136) d'au moins une machine électrique (13), ladite au moins une machine électrique (13) étant démarrée dès que ladite autorisation d'alimentation est délivrée, sans transmettre de puissance mécanique audit au moins un rotor (2,3).

4. Procédé selon l'une quelconque des revendications 1 à 3, **caractérisé en ce que** si au moins deux moteurs thermiques (11) sont audit état démarré, ladite première commande (140) est appliquée à tous lesdits moteurs thermiques (11) dont ledit état est démarré.

5. Procédé selon l'une quelconque des revendications 1 à 4,
**caractérisé en ce que** si au moins deux moteurs thermiques (11) sont audit état démarré, ladite première commande (140) est appliquée à un seul moteur thermique (11) dont ledit état est démarré et situé dans une zone dudit giravion (1) où le niveau de bruit doit être réduit.

6. Procédé selon l'une quelconque des revendications 1 à 5,
**caractérisé en ce que** au cours de ladite deuxième commande (150), ladite au moins une machine électrique (13) est régulée selon une consigne de vitesse de rotation d'au moins un rotor (2,3) de sorte que ladite au moins une machine électrique (13) fournisse une puissance mécanique complémentaire d'une puissance mécanique fournie par ledit au moins un moteur thermique (11) dont ledit état est démarré.

7. Procédé selon l'une quelconque des revendications 1 à 6,
**caractérisé en ce que** ledit procédé comporte une première étape préalable (105) d'agencement d'une machine électrique (13) en lieu et place d'un moteur thermique (11) ou bien sur une prise mécanique (8) dudit giravion (1), ladite prise mécanique (8) permettant l'entraînement dudit au moins un rotor (2,3) par ladite machine électrique (13).

8. Procédé selon l'une quelconque des revendications 1 à 7,
**caractérisé en ce que** ledit procédé comporte une seconde étape préalable (106) de branchement d'une source d'énergie électrique (18) sur une prise de parc (9) dudit giravion (1), ladite prise de parc (9) étant reliée à au moins une machine électrique (13) de sorte à alimenter électriquement ladite au moins une machine électrique (13).

9. Procédé selon l'une quelconque des revendications 1 à 8,
**caractérisé en ce que** ledit procédé comporte une étape de protection (175) munie des sous-étapes suivantes :
- détermination (178) d'une vitesse de rotation d'au moins un rotor (2,3), et
- arrêt (180) de ladite au moins une machine électrique (13) si ladite vitesse de rotation est supérieure à une vitesse prédéterminée.

10. Procédé selon l'une quelconque des revendications 1 à 9,
**caractérisé en ce que** ledit procédé comporte des étapes supplémentaires (120,160,170,180) suivantes pour l'arrêt de ladite au moins une machine électrique (13) et pour l'entraînement dudit au moins un rotor (2,3) par ledit au moins un moteur thermique (11),
- deuxième contrôle (120) de l'état démarré ou arrêté dudit au moins un moteur thermique (11) et de son régime,
- démarrage (160) dudit au moins un moteur thermique (11) dont ledit état est arrêté si au moins un moteur thermique (11) est audit état arrêté,
- régulation (170) dudit au moins un moteur thermique (11) de ladite installation motrice hybride (10) pour atteindre un régime permettant d'entraîner ledit au moins un rotor (2,3) en respectant une consigne de vitesse de rotation prédéterminée, et
- arrêt (180) de ladite au moins une machine électrique (13) dès que ledit au moins un moteur thermique (11) atteint un état permettant de respecter ladite consigne de vitesse de rotation prédéterminée.

## Patentansprüche

1. Verfahren zur Optimierung des von einem Drehflügelflugzeug (1) am Boden erzeugten Geräuschs, wobei das Drehflügelflugzeug (1) umfasst:
- eine Hybridantriebsanlage (10) mit mindestens einem Verbrennungsmotor (11) und mindestens einer elektrischen Maschine (13),
- mindestens einen von der Hybridantriebsanlage (10) angetriebenen Rotor (2, 3), und
- mindestens eine elektrische Energiequelle (18), die die mindestens eine elektrische Maschine (13) über ein Stromnetz (20) elektrisch versorgt,
**dadurch gekennzeichnet, dass** das Verfahren die folgenden Schritte umfasst:
- erste Kontrolle (110), dass sich das Drehflügelflugzeug (1) am Boden befindet, durch eine Erfassungsvorrichtung (7),
- zweite Kontrolle (120), durch eine Steuereinheit (53), des Zustands, gestartet oder angehalten, des mindestens einen Verbrennungsmotors (11), und seiner Drehzahl,
- dritte Kontrolle (130), durch eine Steuereinheit (54), des Zustands, gestartet oder angehalten, der mindestens einen elektrischen Maschine (13), und ihrer Drehzahl,
- erste Steuerung (140), über die Steuereinheit (53), mindestens eines Verbrennungsmotors (11) unter dem mindestens einen Verbrennungsmotor (11), dessen Zustand gestartet ist, wenn der Drehflügler (1) am Boden ist, um eine Drehzahl des mindestens einen Verbrennungsmotors (11) zu steuern, bis eine vorgegebene, als "geräuscharme Drehzahl" bezeichnete Drehzahl des mindestens einen Verbrennungsmotors (11) erreicht ist, wobei die geräuscharme Drehzahl eine reduzierte Drehzahl des Verbrennungsmotors (11) ist, die es ermöglicht, das von dem Verbrennungsmotor (11) erzeugte Geräusch zu reduzieren,
- zweite Steuerung (150), über die Steuereinheit (54), von mindestens einer elektrischen Maschine (13), so dass die mindestens eine elektrische Maschine (13) mechanische Leistung zum Antreiben des mindestens einen Rotors (2, 3) liefert, und
- Bestimmen (115) einer Windgeschwindigkeit um das Drehflügelflugzeug (1) durch ein Anemometer (17), wobei wenn die Windgeschwindigkeit größer als ein vorgegebener Grenzwert ist, die zweite Steuerung (150) von mindestens einer elektrischen Maschine (13) nicht ausgeführt oder gestoppt wird.

2. Verfahren nach Anspruch 1,
**dadurch gekennzeichnet, dass** das Verfahren eine vierte Kontrolle (135) des Stromnetzes (20) umfasst, bei der überprüft wird, ob das Stromnetz (20) in der Lage ist, mindestens eine elektrische Maschine (13) zu versorgen, wobei eine Genehmigung zum Versorgen der mindestens einen elektrischen Maschine (13) erteilt wird, wenn das Stromnetz (20) in der Lage ist, die mindestens eine elektrische Maschine (13) zu versorgen, wobei die Genehmigung zum Versorgen erforderlich ist, um die zweite Steuerung (150) der mindestens einen elektrischen Maschine (13) auszuführen.

3. Verfahren nach Anspruch 2,
**dadurch gekennzeichnet, dass** das Verfahren einen Schritt des vorzeitigen Startens (136) der mindestens einen elektrischen Maschine (13) umfasst, wobei die mindestens eine elektrische Maschine (13) gestartet wird, sobald die Genehmigung zum Versorgen erteilt wird, ohne mechanische Leistung auf den mindestens einen Rotor (2, 3) zu übertragen.

4. Verfahren nach einem der Ansprüche 1 bis 3,
**dadurch gekennzeichnet, dass**, wenn mindestens zwei Verbrennungsmotoren (11) in dem gestarteten Zustand sind, die erste Steuerung (140) auf alle diejenigen Verbrennungsmotoren (11) angewendet wird, deren Zustand gestartet ist.

5. Verfahren nach einem der Ansprüche 1 bis 4,
**dadurch gekennzeichnet, dass**, wenn mindestens zwei Verbrennungsmotoren (11) in dem gestarteten Zustand sind, die erste Steuerung (140) auf einen einzigen Verbrennungsmotor (11) angewendet wird, dessen Zustand gestartet ist und der sich in einem Bereich des Drehflügelflugzeugs (1) befindet, in dem der Geräuschpegel reduziert werden soll.

6. Verfahren nach einem der Ansprüche 1 bis 5,
**dadurch gekennzeichnet, dass** während der zweiten Steuerung (150) die mindestens eine elektrische Maschine (13) gemäß einem Drehzahlsollwert mindestens eines Rotors (2, 3) so geregelt wird, dass die mindestens eine elektrische Maschine (13) eine mechanische Leistung liefert, die komplementär zu einer mechanischen Leistung ist, die von dem mindestens einen Verbrennungsmotor (11) geliefert wird, dessen Zustand gestartet ist.

7. Verfahren nach einem der Ansprüche 1 bis 6,
**dadurch gekennzeichnet, dass** das Verfahren einen ersten vorhergehenden Schritt (105) des Anbringens einer elektrischen Maschine (13) anstelle eines Verbrennungsmotors (11) oder an einer mechanischen Anschlussstelle (8) des Drehflügelflugzeugs (1) umfasst, wobei die mechanische Anschlussstelle (8) den Antrieb des mindestens einen Rotors (2, 3) durch die elektrische Maschine (13) ermöglicht.

8. Verfahren nach einem der Ansprüche 1 bis 7,
**dadurch gekennzeichnet, dass** das Verfahren einen zweiten vorhergehenden Schritt (106) des Anschließens einer elektrischen Energiequelle (18) an einen Parkanschluss (9) des Drehflügelflugzeugs (1) umfasst, wobei der Parkanschluss (9) mit mindestens einer elektrischen Maschine (13) verbunden ist, um die mindestens eine elektrische Maschine (13) elektrisch zu versorgen.

9. Verfahren nach einem der Ansprüche 1 bis 8,
**dadurch gekennzeichnet, dass** das Verfahren einen Schutzschritt (175) mit den folgenden Unterschritten umfasst:
- Bestimmen (178) einer Drehgeschwindigkeit mindestens eines Rotors (2, 3), und
- Anhalten (180) der mindestens einen elektrischen Maschine (13), wenn die Drehgeschwindigkeit höher als eine vorgegebene Geschwindigkeit ist.

10. Verfahren nach einem der Ansprüche 1 bis 9,
**dadurch gekennzeichnet, dass** das Verfahren die folgenden zusätzlichen Schritte (120, 160, 170, 180) zum Anhalten der mindestens einen elektrischen Maschine (13) und zum Antreiben des mindestens einen Rotors (2, 3) durch den mindestens einen Verbrennungsmotor (11) umfasst:
- zweite Kontrolle (120) des Zustands, gestartet oder angehalten, des mindestens einen Verbrennungsmotors (11) und seiner Drehzahl,
- wenn mindestens ein Verbrennungsmotor (11) in dem angehaltenen Zustand ist, Starten (160) des mindestens einen Verbrennungsmotors (11), dessen Zustand angehalten ist,
- Regeln (170) des mindestens einen Verbrennungsmotors (11) der Hybridantriebsanlage (10), um eine Drehzahl zu erreichen, die es ermöglicht, den mindestens einen Rotor (2, 3) unter Einhaltung eines vorgegebenen Drehzahlsollwerts anzutreiben, und
- Anhalten (180) der mindestens einen elektrischen Maschine (13), sobald der mindestens eine Verbrennungsmotor (11) einen Zustand erreicht, der es ermöglicht, den vorgegebenen Drehzahlsollwert einzuhalten.

## Claims

1. Method of optimizing the noise generated by a rotorcraft (1) on the ground, said rotorcraft (1) comprising:
- a hybrid power plant (10) provided with at least one fuel-burning engine (11) and at least one electric machine (13);
- at least one rotor (2,3) rotated by said hybrid power plant (10) and
- at least one electrical power source (18) powering said at least one electric machine (13) with electricity by means of an electrical network (20);
**characterized in that** said method comprises the following steps:
- first check (110) that said rotorcraft (1) is on the ground by a detection device (7),
- second check (120) by a control unit (53) of whether said at least one fuel-burning engine (11) is in the started state or stopped state, and its speed;
- third check (130) by a control device (54) of whether said at least one electric machine (13) is in the started state or stopped state, and its speed;
- first control step (140) by means of said control unit (53) of at least one fuel-burning engine (11) among said at least one fuel-burning engine (11), of which said state is started if said rotorcraft (1) is on the ground, in such a manner as to control a speed of said at least one fuel-burning engine (11) until said at least one fuel-burning engine (11) reaches a predetermined speed referred to as the "silent speed", said silent speed being a slower speed of said fuel-burning engine (11) allowing the noise generated by said fuel-burning engine (11) to be reduced,
- second control step (150) by means of said control device (54) of at least one electric machine (13), such that said at least one electric machine (13) delivers mechanical power to drive said at least one rotor (2, 3) and
- determination (115) by an anemometer (17) of a speed of the wind around said rotorcraft (1) and of whether said speed of said wind is greater than a predetermined limit, said second control step (150) of at least one electric machine (13) is not performed or else is stopped.

2. Method according to Claim 1,
**characterized in that** said method comprises a fourth check (135) of said electrical network (20), so as to verify that said electrical network (20) is capable of powering at least one electric machine (13), authorization to power said at least one electric machine (13) being issued if said electrical network (20) is capable of powering said at least one electric machine (13), said power authorization being necessary in order to implement said second control step (15) of said at least one electric machine (13).

3. Method according to Claim 2,
**characterized in that** said method comprises a anticipated start-up step (136) of at least one electric machine (13), said at least one electric machine (13) being started up as soon as said power authorization is issued, without mechanical power being transmitted to said at least one rotor (2,3).

4. Method according to any one of Claims 1 to 3, **characterized in that** if at least two fuel-burning engines (11) are in said started state, said first control step (140) is applied to all of said fuel-burning engines (11), of which said state is started.

5. Method according to any one of Claims 1 to 4, **characterized in that** if at least two fuel-burning engines (11) are in said started state, said first control step (140) is applied to a single fuel-burning engine (11), of which said state is started and which is situated in a zone of said rotorcraft (1) in which the noise level has to be reduced.

6. Method according to any one of Claims 1 to 5, **characterized in that** during the course of said second control step (150), said at least one electric machine (13) is regulated on a setpoint speed of rotation of at least one rotor (2,3), so that said at least one electric machine (13) delivers mechanical power in addition to mechanical power delivered by said at least one fuel-burning engine (11), of which said state is started.

7. Method according to any one of Claims 1 to 6, **characterized in that** said method comprises a first preliminary step (105) of fitting an electric machine (13) instead of a fuel-burning engine (11) or, of course, a mechanical power take-off (8) of said rotorcraft (1), said mechanical power take-off (8) making it possible for said at least one rotor (2,3) to be driven by said electric machine (13) .

8. Method according to any one of Claims 1 to 7, **characterized in that** said method comprises a second preliminary step (106) of plugging an electrical power source (18) into a ground power receptacle (9) of said rotorcraft (1), said ground power receptacle (9) being connected to at least one electric machine (13), in such a manner as to power said at least one electric machine (13) with electricity.

9. Method according to any one of Claims 1 to 8, **characterized in that** said method comprises a protection step (175) made up of the following sub-steps:
- determination (178) of a speed of rotation of at least one rotor (2,3); and
- switch-off (180) of said at least one electric machine (13) if said speed of rotation is greater than a predetermined speed.

10. Method according to any one of Claims 1 to 9, **characterized in that** said method comprises the following additional steps (120, 160, 170, 180) for switching off said at least one electric machine (13) and for the driving of said at least one rotor (2,3) by said at least one fuel-burning engine (11):
- second check (120) of whether the at least one fuel-burning engine (11) is in the started state or stopped state, and its speed;
- start-up (160) of said at least one fuel-burning engine (11), of which said state is stopped if at least one fuel-burning engine (11) is in said stopped state;
- regulation (170) of said at least one fuel-burning engine (11) of said hybrid power plant (10), so that it reaches a speed which enables said at least one rotor (2,3) to be driven while observing a predetermined setpoint speed of rotation; and
- switch-off (180) of said at least one electric machine (13) as soon as said at least one fuel-burning engine (11) reaches a state which makes it possible for the predetermined setpoint speed of rotation to be observed.
